# EUROPEAN PATENT APPLICATION

(11) **EP 4 492 591 A2**
(43) Date of publication of application: **15.01.2025**
(21) Application number: 24187606.9
(22) Date of filing: 10.07.2024
(51) Int. Cl.: H01S 3/094, H01S 3/06, H01S 3/042, H01S 3/04

(54) **CONE LASER-GAIN MODULE, DOUBLE-SIDE-PUMPED CONE LASER-GAIN MODULE, CONE LASER AMPLIFIER, AND CONE LASER OSCILLATOR**

(30) Priority: 12.07.2023 US 202363526189 P; 02.07.2024 US 202418761347
(71) Applicant: National Tsing Hua University, Hsinchu City 30013 (TW)
(72) Inventor: Huang, Yen-Chieh, 30013 Hsinchu City (TW)
(74) Representative: Kurig, Thomas

(57) **Abstract**

A cone laser-gain module (20, 20A, 20B, 20C, 20D, 20H, 20J) including a pump-light source (100), a laser rod (300), and a cone structure (400), is provided. The cone structure (400), including a large and a small cone aperture connected by cone axis (CA), is configured to accommodate the laser rod (300) parallel to the cone axis (CA) and concentrate the pump light (SL, SL') toward the laser rod (300). The pump light (SL, SL') enters the cone structure (400) from a large cone aperture. The laser rod (300) is configured to absorb the pump lights (SL, SL') to generate amplified laser light (AL) along a laser-emission axis (LEA) parallel to the laser-rod axis. In particular, the pump lights (SL'), some of which diverge and initially miss the laser rod (300), are reflected and concentrated on the laser rod (300) by an inner surface (400S4) of the cone structure (400).

## Description

### BACKGROUND

### Technical Field

The invention generally relates to a cone laser-gain module, a double-side-pumped cone laser-gain module, a cone laser amplifier, and a cone laser oscillator.

### Description of Related Art

A laser generates a collimated beam of radiation with high spectral purity. A laser oscillator generally includes a laser gain module installed with a laser rod between two cavity mirrors with one highly reflecting and the other partially reflecting at the laser wavelength. In such a configuration, the two ends of the laser rod are usually coated with anti-reflection dielectric layers to reduce the optical loss during laser buildup. The partially reflecting mirror is the so-called output coupler, emitting a laser output. Without using the cavity mirrors, one can also coat highly reflecting dielectric layers to one end of the laser rod and partially reflecting layers to the other end of the laser rod to form a monolithic laser cavity with laser emission from the partial-reflecting end of the laser rod.

When a laser gain module has a high gain, one can use it to build a laser amplifier by seeding it with a low-power laser. In some designs, the seed laser propagates back and forth a few times in the laser rod to extract more gain before emitting from the output end of the laser gain module. In such a multi-pass configuration, the transmitting end of the laser rod is also coated with an anti-reflection dielectric layer at the laser wavelength to reduce the reflection loss at the air-crystal interface and maximize the amplification gain.

Generally, one must supply pump energy to a laser rod to generate or amplify a laser. Optical pumping is one popular scheme, in which, for instance, a diode laser of a first wavelength is focused into a small volume matched to the laser-emission volume in the laser gain medium to efficiently excite the laser radiation and generate a laser of another wavelength.

However, a light-emitting diode (LED) or sometimes a laser diode (LD) emits highly diverging light that is hard to focus into a small volume to pump a laser rod. Furthermore, the emission area of a high-power LED source is usually much larger than the emission area of a laser. Converting LED light into laser radiation is usually poor in efficiency due to the vast mismatch in their emission areas or volumes. The present invention is disclosed to overcome this drawback.

### SUMMARY

Accordingly, this invention discloses a cone laser-gain module, double-side-pumped cone laser-gain module, cone laser amplifier, and cone laser oscillator, which adopts one or a plural number of cone-shape internal reflecting structures each containing a laser rod along the cone axis to receive man-made pump light for laser amplification and oscillation.

According to an embodiment of the invention, a cone laser-gain module including a cone structure, a laser rod, and a man-made pump-light source is provided. The pump-light source is configured to emit pump lights of a first wavelength along a laser-emission axis. The laser rod with its longitudinal axis parallel to the laser emission axis is disposed on a power-flow path of the pump lights and configured to absorb the pump lights to generate amplified laser lights of another wavelength along the laser-emission axis. The cone structure is configured to accommodate the laser rod and configured to confine the pump lights toward the laser rod. The cone axis of the cone structure is aligned parallel to the laser emission axis. The cone structure has a large cone aperture and a small cone aperture connected by the cone axis. The pump lights enter the cone structure from a large cone aperture toward a small cone aperture. The pump lights, some of which diverge and initially miss the laser rod, are reflected and concentrated on the laser rod by an inner surface of the cone structure.

According to an embodiment of the invention, a cone laser amplifier including the aforementioned cone laser-gain module and a seed laser is provided. The seed laser is configured to inject a seed light into the cone laser-gain module for amplification.

According to an embodiment of the invention, a cone laser oscillator including the aforementioned cone laser-gain module, a cavity mirror, and an output-coupler mirror is provided. The cone laser-gain module is installed between the cavity mirror and the output-coupler mirror. The laser emits from the output-coupler mirror.

According to an embodiment of the invention, a double-side-pumped cone laser-gain module including two cone structures, a laser rod, and two man-made pump-light sources is provided. The two pump-light sources are configured to emit pump lights of a first wavelength along a laser-emission axis. The laser rod is disposed on a power-flow path of the pump lights and configured to absorb the pump lights to generate amplified laser lights of another wavelength. A longitudinal axis of the laser rod is aligned with the laser-emission axis. The two cone structures with a colinear cone axis joining the two small cone apertures are configured to accommodate the laser rod and to confine the pump light toward the laser rod. The collinear cone axis of the cone structure is aligned parallel to the laser-emission axis. The pump lights emitted from the two pump-light sources enter the two cone structures from the two large cone apertures toward the joint small cone apertures. The pump lights, some of which diverge and initially miss the laser rod, are reflected and concentrated on the laser rod by the inner surfaces of the two cone structures.

According to an embodiment of the invention, a laser amplifier including the aforementioned double-side-pumped cone laser-gain module and a seed laser is provided. The seed laser is configured to inject a seed light into the cone laser-gain module for amplification.

According to an embodiment of the invention, a laser oscillator including the aforementioned double-side-pumped cone laser-gain module, a cavity mirror, and an output-coupler mirror is provided. The double-side-pumped cone laser-gain module is installed between the cavity mirror and the output-coupler mirror. The laser emits from the output-coupler mirror.

The end-pumped cone structures adopted in the embodiments are particularly effective for concentrating a man-made diverging pump light toward a laser rod. Furthermore, when the off-axis pump light zigzags toward the narrow end of the cone structure, the incident angle of the pump light on the cone surface is progressively smaller and some unabsorbed pump light can be reflected backward to re-pump the laser rod. With the single-cone and double-cone structures disclosed in the present invention, a man-made diverging pump-light source can still be efficiently used for laser pumping. To increase laser gain, the present invention further discloses embodiments combining both end pumping and side pumping for the cone laser-gain module.

To make the aforementioned embodiments of the present invention more comprehensible, they are further described in the following with accompanying drawings.

### BRIEF DESCRIPTION OF THE DRAWINGS

The accompanying drawings are included to provide a further understanding of the disclosure and are incorporated in and constitute a part of this specification. The drawings illustrate exemplary embodiments of the disclosure and, together with the description, serve to explain the principles of the disclosure.
FIG. 1A and 1B are schematic views of two different types of cone laser amplifiers according to an embodiment of the invention.
FIG. 2A and 2B are schematic views of two different types of cone laser oscillators according to an embodiment of the invention.
FIG. 3 is a schematic view of a single-cone laser-gain module according to a first embodiment of the invention.
FIG. 4 is a schematic view of a single-cone laser-gain module with a luminescence material according to a second embodiment of the invention.
FIG. 5A is a schematic view of a single-cone laser-gain module with a cooling-water chamber according to a third embodiment of the invention.
FIG. 5B is a cross-sectional view of FIG. 5A.
FIG. 6A is a schematic view of a single-cone laser-gain module with a cooling-water tube according to a fourth embodiment of the invention.
FIG. 6B is a cross-sectional view of FIG. 6A.
FIG. 7A is a schematic view of a single-cone laser-gain module with both end- and side-pumps according to a fifth embodiment of the invention.
FIG. 7B is a cross-sectional view of FIG. 7A.
FIG. 8A is a schematic view of a double-cone laser-gain module according to a sixth embodiment of the invention.
FIG. 8B is a left cross-sectional view of the pump-light source 100-1 in FIG. 8A.
FIG. 8C is a right cross-sectional view of the assembly of the pump-light source 100-2 and heat sink/cooling plate 200-2 in FIG. 8A.
FIG. 9A is a schematic view of a single-partial-cone laser-gain module according to a seventh embodiment of the invention.
FIG. 9B is a right cross-sectional view of FIG. 9A.
FIG. 10 is a schematic view of a double-partial-cone laser-gain module according to an eighth embodiment of the invention.
FIG. 11A is a schematic view of a partial-cone laser-gain module with both end- and side-pumps according to a ninth embodiment of the invention.
FIG. 11B is a right cross-sectional view of FIG. 11A.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

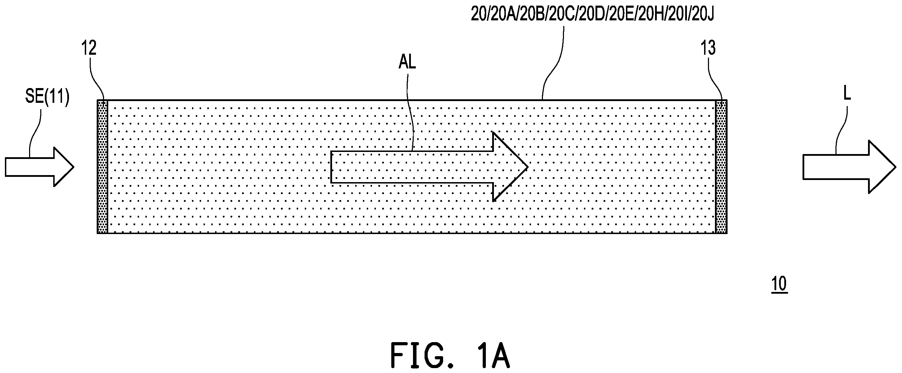

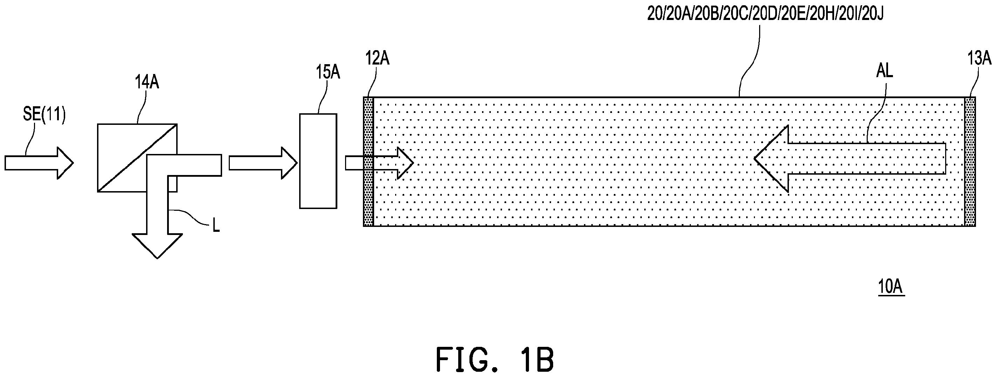

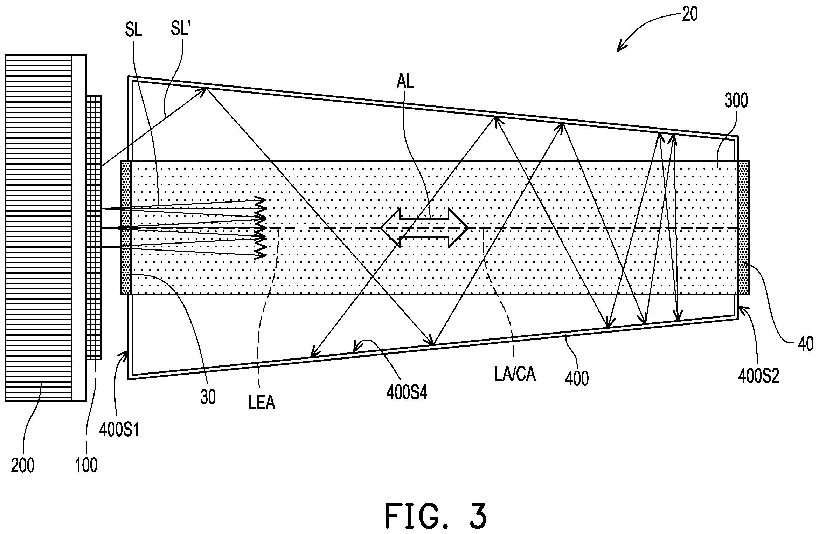

FIG. 1A and 1B are schematic views of two different types of cone laser amplifiers according to an embodiment of the invention. Referring to FIG. 1A, a cone laser amplifier 10 in this embodiment includes a cone laser-gain module 20/20A/20B/20C/20D/20E/20H/20I/20J and a seed laser 11. The seed laser 11 is configured to emit a seed light SE into the cone laser-gain module 20/20A/20B/20C/20D/20E/20H/20I/20J. The seed light SE could be a small laser signal, propagating once or a plural number of times through the laser-gain module to extract the laser gain in the laser rod. Preferably, the two end surfaces of the laser rod (for example, laser rod 300 in FIG. 3) in the cone laser-gain module 20/20A/20B/20C/20D/20E/20H/20I/20J are coated with anti-reflection dielectric layers 12 and 13 at the seed-light wavelength to minimize the reflection loss when the seed light SE enters the laser rod.

Referring to FIG. 1B, the cone laser amplifier 10A of this embodiment is similar to the cone laser amplifier 10 of FIG. 1A, except that the cone laser amplifier 10A further includes a polarization beam splitter 14A and a quarter wave plate 15A. Preferably, one end surface of the laser rod in the cone laser-gain module 20/20A/20B/20C/20D/20E/20H/20I/20J is coated with an anti-reflection dielectric layer 12A to minimize the reflection loss when the seed light SE enters the laser rod and the other end surface of the laser rod is coated with a high-reflection dielectric layer 13A at the seed-light wavelength to reflect the seed light to enter the laser rod again for further amplification. Moreover, the seed light SE is preferably a linear polarized light. For example, taking p-polarization for the input seed light, the seed light SE passes through the polarization beam splitter 14A and then transmits to the quarter wave plate 15A. The quarter-wave plate 15A converts the p-polarized seed light SE into a circularly polarized light, which then enters the cone laser-gain module 20/20A/20B/20C/20D/20E/20H/20I/20J and is reflected from the downstream high-reflection dielectric layer 13A to complete double-pass amplification. The amplified laser lights AL exit from the front end of the cone laser-gain module 20/20A/20B/20C/20D/20E/20H/20I/20J, and go through the quarter-wave plate 15A one more time to become an s-polarized wave. The amplified laser light AL with s-polariation is deflected by the polarization beam splitter 14A and separated from the seed-laser path.

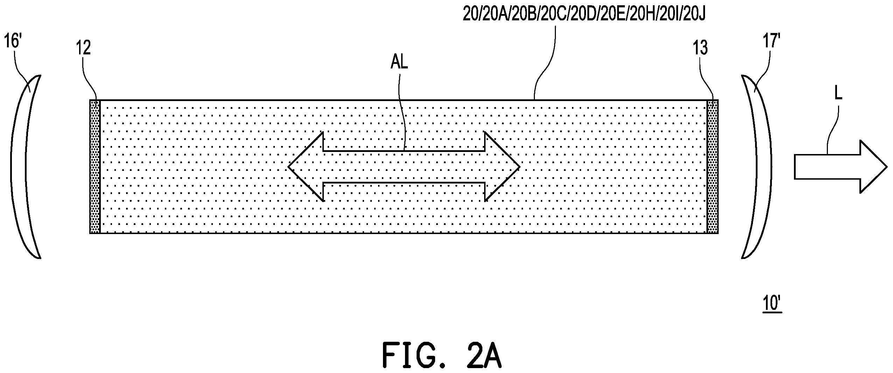

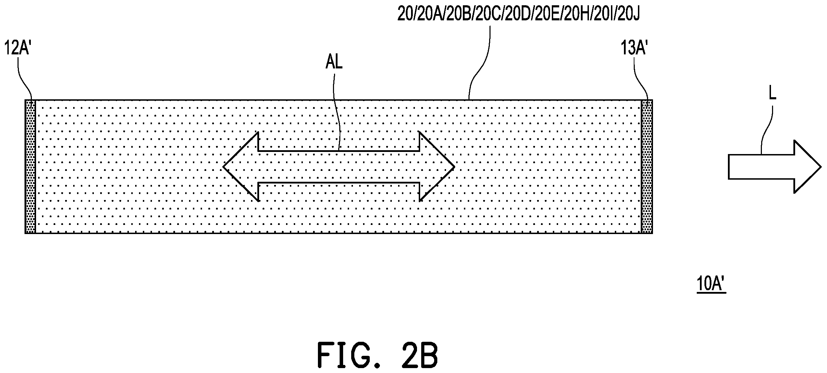

FIG. 2A and 2B are schematic views of two different types of cone laser oscillators according to an embodiment of the invention. Referring to FIG. 2A, the cone laser oscillator 10' of this embodiment includes a cone laser-gain module 20/20A/20B/20C/20D/20E/20H/20I/20J, a first (highly reflecting) cavity mirror 16', and a second cavity mirror (partially reflecting output-coupler mirror) 17', wherein the cone laser-gain module 20/20A/20B/20C/20D/20E/20H/20I/20J is installed between the first cavity mirror 16' and the second cavity mirror 17'. The cone laser-gain module 20/20A/20B/20C/20D/20E/20H/20I/20J can provide amplification gain to small-signal laser light propagating back and forth between the two mirrors. Preferably, the cavity mirror is coated with high-reflecting dielectric layers to reflect the oscillating laser light and the output-coupler mirror is coated with partial-reflecting dielectric layers to emit the laser light.

Specifically, in this embodiment, the first cavity mirror 16' is disposed on one side of the cone laser-gain module 20/20A/20B/20C/20D/20E/20H/20I/20J, configured to fully reflect the amplified laser light AL. The second cavity mirror 17' is disposed on the other side of the cone laser-gain module 20/20A/20B/20C/20D/20E/20H/20I/20J, configured to partially transmit the laser to an output amplified laser light AL. In other words, the first cavity mirror 16' is a high reflector and the second cavity mirror 17' is a laser output coupler with partial transmission at the laser emission wavelength. In practice, the locations of the first and second cavity mirrors 16', 17' can be exchanged without changing the performance of the laser, except that the laser emission direction is reversed. For example, to implement an Nd:YAG laser end-pumped by 808-nm light and emitting at 1064 nm, the first and second cavity mirrors 16', 17' are designed to be highly reflecting and partially reflecting at 1064 nm, respectively; the dielectric layers 12 and 13 on the laser rod are designed to be anti-reflecting at 1064 nm; preferably, the dielectric layer facing the pump light is anti-reflecting at 808 nm.

Referring to FIG. 2B, the cone laser oscillator 10A' of this embodiment is similar to the cone laser oscillator 10' of FIG. 2A, except that the two end surfaces of the laser rod in the cone laser-gain module 20/20A/20B/20C/20D/20E/20H/20I/20J are coated with a high-reflection dielectric layer 12A' and a partial-reflection dielectric layer 13A' at the laser wavelength. That is, without using the cavity mirrors, the high-reflection dielectric layer 12A' is disposed on one end of the laser rod and the partial-reflection dielectric layer 13A' is disposed on the other end of the laser rod to form a monolithic laser cavity with laser emission from the partial-reflecting end of the laser rod. Preferably, the dielectric layer facing the pump light is also anti-reflecting at the pump-light wavelength. The cavity mirrors in FIG. 2A and the coated dielectric layers in FIG. 2B can be exchanged, as long as one side of the gain module is highly reflecting and the other side of the gain module is partially reflecting. For instance, the laser oscillator can be formed by the high-reflecting mirror 16' and the partial-reflecting dielectric layer 13' surrounding the cone gain module 20/20A/20B/20C/20D/20E/20H/20I/20J.

FIG. 3 is a schematic view of a single-cone laser-gain module according to a first embodiment of the invention. Referring to FIG. 3, specifically, in this embodiment, the cone laser-gain module 20 includes a pump-light source 100, a laser rod 300 with its end faces coated with a first dielectric layer 30 and a second dielectric layer 40, and a cone structure 400. The first dielectric layer 30 disposed on the pump-light-incident side 40051 of the cone structure 400, and the second dielectric layer 40 disposed on the pump-light-exiting side 400S2 of the cone structure 400.

In this embodiment, the pump-light source 100 is configured to emit pump lights SL and SL' along a laser-emission axis LEA. For example, the pump-light source 100 is an array of light-emitting diodes (LEDs), an array of laser diodes (LDs), or an array of a combination of light-emitting diodes and laser diodes. The pump lights SL and SL' are emitted about the cone axis.

In this embodiment, the laser rod 300 is disposed on a power-flow path of the pump lights SL and SL'. Moreover, the laser rod 300 is disposed along the laser-emission axis LEA and configured to absorb the pump lights SL and SL' of a first wavelength to generate amplified laser lights AL at the laser wavelength, wherein a longitudinal axis LA of the laser rod 300 is aligned parallel to the laser-emission axis LEA. The laser rod (laser gain medium) 300 is made of one among Nd:YAG, Nd:Glass, Nd:YAP, Yb:YAG, Ho/Cr/Tm:YAG, Nd:YVO4, Er:YAG, Cr:LiSAF, Ti:Sapphire, Cr/Er:YSGG, Alexandrite, and Er:Glass crystals. The amplified laser light AL can be one amplified from the fluorescence of the pumped laser rod or an externally injected seed laser. Taking an Nd:YAG laser as an example, the wavelength of the pump lights SL and SL' is 808 nm, and the wavelength of the amplified laser lights AL is an emission line of Nd³⁺ at 1064 nm.

In this embodiment, the cone structure 400 with an inner reflecting surface is configured to accommodate the laser rod 300, accept the pump lights SL and SL', and reflect the off-axis pump lights SL' to the laser rod 300. Specifically, the cone structure 400 is configured to reflect the diverging pump lights SL', which initially miss the laser rod 300, back to the laser rod 300, wherein a cone axis CA of the cone structure 400 is aligned parallel to the longitudinal axis LA of the laser rod 300. In one embodiment, the laser-emission axis LEA is also aligned parallel to the longitudinal axis LA of the laser rod 300, but the disclosure is not limited thereof.

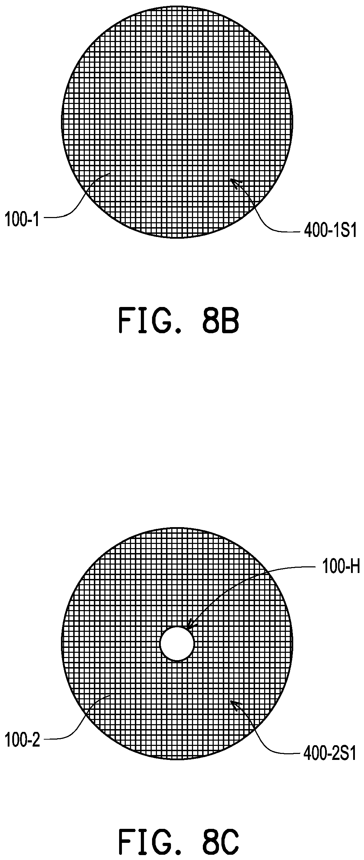

In this embodiment, the pump lights SL and SL' emitted from the pump-light source 100 enter the cone structure 400 from a pump-light-incident side 400S1 of the cone structure 400, and, in this case, the output laser L emits from a pump-light-exiting side 400S2 of the cone structure 400. However, the laser could also emit from the opposite side (not shown in the figure) if a transmission aperture (100-H in Fig. 8C) is opened on the assembly of the pump light source 100 and heat sink 200. The pump-light-incident side 400S1 and the pump-light-exiting side 400S2 are opposite to each other. The off-axis pump lights SL', which initially miss the laser rod 300, are reflected and concentrated on the laser rod 300 by an inner surface 400S4 of the cone structure 400. Moreover, the aperture of the pump-light-incident side 400S1 of the cone structure 400 is larger than the aperture of the pump-light-exiting side 400S2 of the cone structure 400.

That is, the pump lights SL and SL' emitted from the pump-light source 100 enter the cone structure 400 from the large aperture of the cone. The on-axis or paraxial pump lights SL are intercepted and absorbed by the co-axis laser rod 300 immediately. The off-axis pump lights SL' that initially miss the laser rod 300 are reflected and concentrated on the laser rod 300 by the inner surface 400S4 of the cone structure 400. The laser rod 300 is configured to absorb the pump lights SL and SL' of a first wavelength to emit a laser signal of another wavelength along the rod axis. Preferably, the pump-incidence surface of the laser rod 300 is optically coated with an anti-reflection dielectric layer at a first wavelength or the pump-light wavelength to maximize the transmission of the pump lights.

In one embodiment, the inner surface 400S4 of the cone structure 400 is made of reflecting metal, dielectric, or ceramic. For example, when the cone structure 400 is made of transparent dielectric, by virtue of total internal reflection, the off-axis pump lights SL', which initially miss the laser rod 300, are reflected and concentrated on the laser rod 300 by an inner surface 400S4 of the cone structure 400.

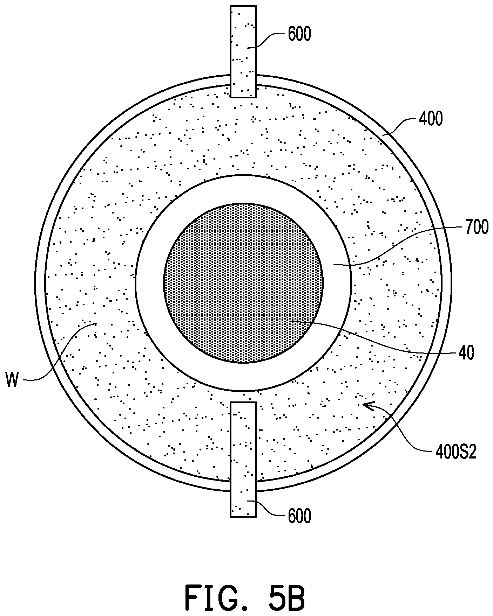

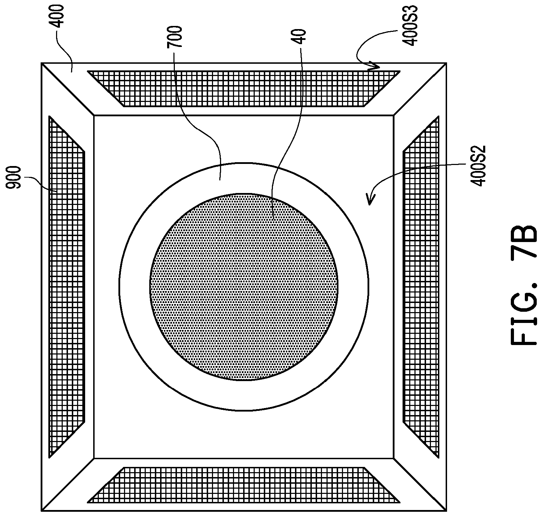

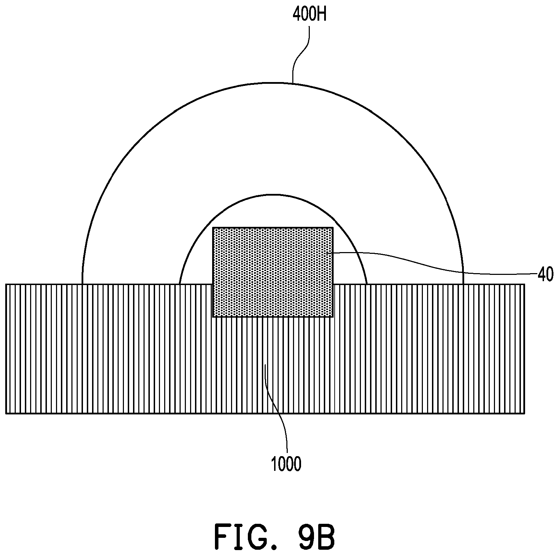

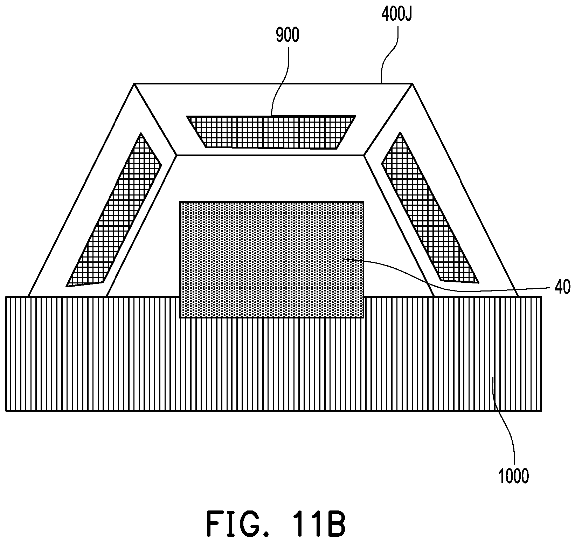

In one embodiment, a cross-section (perpendicular to the cone axis CA) of the cone structure 400 is a full circle (as shown in FIG. 5B), a partial circle (as shown in FIG. 9B), a square (as shown in FIG. 7B), a rectangle, or a polygon (as shown in FIG. 11B).

In this embodiment, the cone laser-gain module 20 further includes a heat sink/cooling plate 200. The heat sink/cooling plate 200 is attached to the pump-light source 100 for heat dissipation.

Furthermore, in this embodiment, the first dielectric layer 30 is preferably anti-reflecting at the pump-light wavelength to maximize the transmission of the pump lights SL and SL'. When this laser module functions as the Fig. 1A laser amplifier with a transmission hole on both the pump-light source 100 and the heat sink/cooling plate 200 (refer to Fig. 8C), both the first and second dielectric layers 30, 40 are anti-reflecting at the laser wavelength to maximize the transmission of the seed and amplified lasers. For example, if the laser rod 300 is an Nd³⁺ doped gain medium pumped at 808 nm, the pump-side/first dielectric layer 30 can be anti-reflecting at both 808 and 1064 nm for the pump and seed wavelengths, and the second dielectric layer 40 can be anti-reflecting at 1064 nm for the output laser. When this laser module functions as the Fig. 2B oscillator, to establish laser oscillation, the dielectric layers 30, 40 can be one highly reflecting and the other partially reflecting at the laser wavelength. For example, if the laser rod is a Nd³⁺ doped gain medium, the pump-side dielectric layer can be anti-reflecting at 808 nm and the two dielectric layers can be one highly reflecting and the other partially reflecting at 1064 nm for laser oscillation.

Based on the foregoing, the cone laser amplifier 10 or the laser-gain module 20 in the embodiments of the disclosure includes the cone structure 400. The cone structure 400 is configured to reflect the diverging pump lights SL', which initially miss the laser rod 300, back to the laser rod 300. Thus, the off-axis light ray, for example, the pump lights SL', can be reflected and concentrated on the laser rod 300 to boost the pump efficiency and therefore increase the gain for laser amplification or laser oscillation.

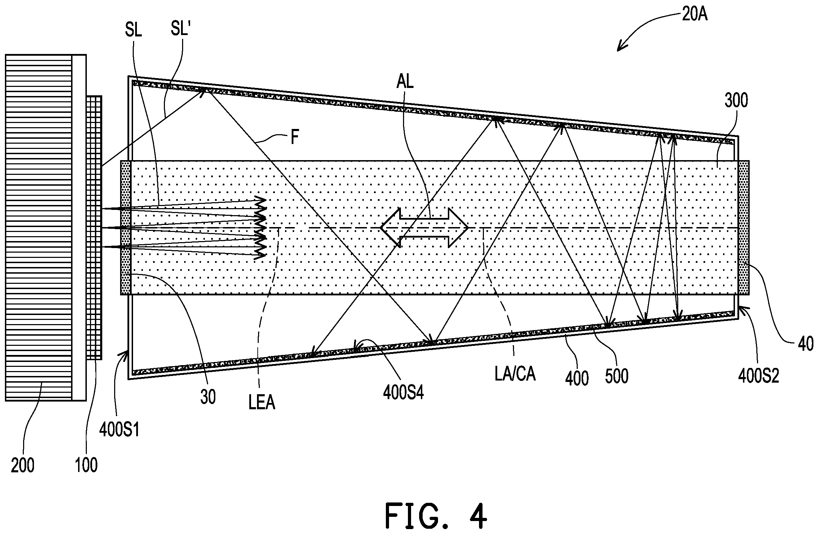

FIG. 4 is a schematic view of a single-cone laser-gain module with a luminescence surface according to a second embodiment of the invention. Referring to FIG. 4, the cone laser-gain module 20A of this embodiment is similar to the cone laser-gain module 20 of FIG. 3, except that the cone laser-gain module 20A further includes luminescence materials 500 coated on the inner surface 400S4 of the cone structure 400 (as shown in FIG. 3) or filled inside the cone structure 400 or doped in the laser rod 300. The luminescence materials 500 are configured to absorb the pump lights SL and SL' of a first wavelength to generate luminescence lights F of a second wavelength, and the laser rod 300 absorbs the luminescence lights F to generate the amplified laser lights AL at the laser wavelength. For example, luminescence materials 500 are materials doped with Cerium (Ce) or Chromium (Cr3+), which can be excited by visible lights from the pump-light source 100 to emit yellow/red light or near-infrared light for pumping a laser rod 300 (Eg. Nd³⁺ doped laser media). In this case, the active ions in the laser rod 300 might not be adapted to absorb the light from the pump-light source 100 directly, but to receive the luminescence lights F as a pump for laser transitions.

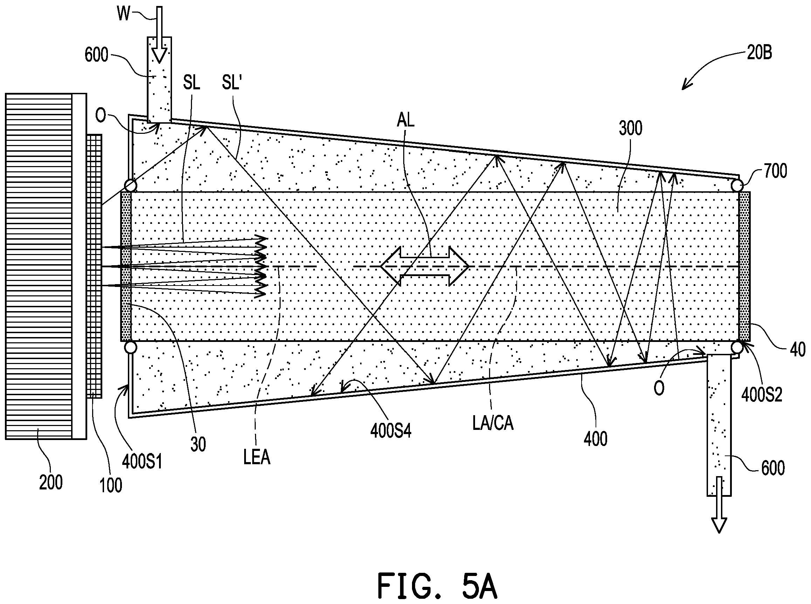

FIG. 5A is a schematic view of a single-cone laser-gain module with a cooling-water chamber according to a third embodiment of the invention. FIG. 5B is a right cross-sectional view of FIG. 5A. Referring to FIG. 5A and FIG. 5B, the cone laser-gain module 20B of this embodiment is similar to the cone laser-gain modules 20 and 20A, except that the cone laser-gain module 20B further includes two hollow tubes 600 and a cone water chamber. The two hollow tubes 600 are respectively disposed on two openings O of the cone structure 400 and configured to allow water W to flow in or out for cooling down the laser rod 300.

In this embodiment, the cone laser-gain module 20B further includes rubber O-rings 700. The rubber O-rings 700 are configured to seal the gaps between the laser rod 300 and the cone structure 400 to prevent water leakage.

Based on the foregoing, since the cone laser-gain module 20B of this embodiment is equipped with two hollow tubes 600 and a cone water chamber, the cone laser-gain module 20B can remove the waste heat in the process of generating amplified laser lights AL in the laser rod 300, so that the cone laser-gain module 20B can continue to operate stably and efficiently.

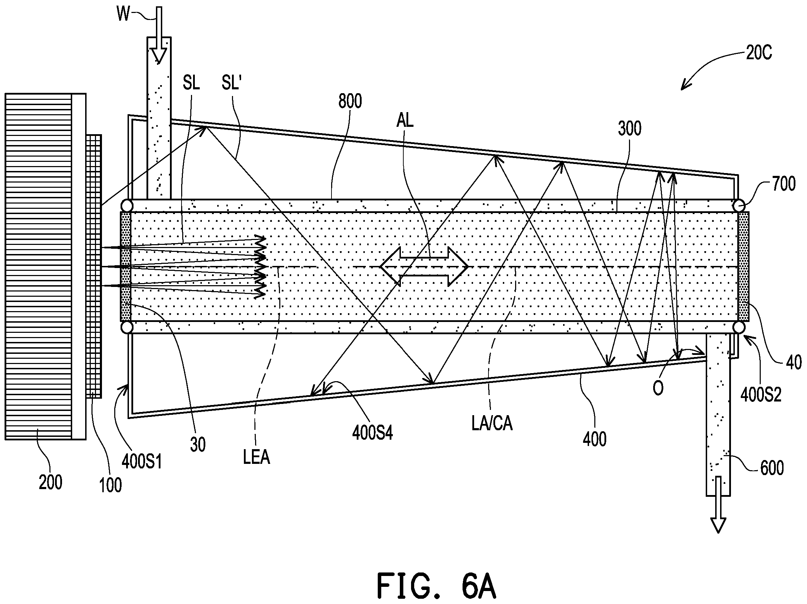

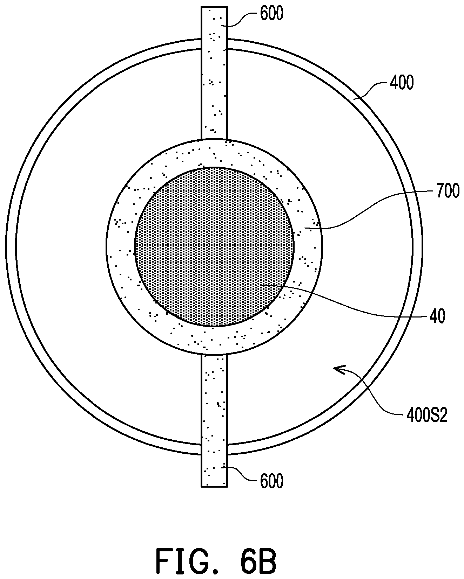

FIG. 6A is a schematic view of a single-cone laser-gain module with a cooling-water tube according to a fourth embodiment of the invention. FIG. 6B is a cross-sectional view of FIG. 6A. Referring to FIG. 6A and FIG. 6B, the cone laser-gain module 20C of this embodiment is similar to the cone laser-gain modules 20A and 20B, except that the cone laser-gain module 20C further includes a water tube 800 enclosing the laser rod 300. The water tube 800 is accommodated in the cone structure 400, surrounding the laser rod 300 and connecting to the two hollow tubes 600.

Based on the foregoing, since the cone laser-gain module 20C further includes a water tube 800 confining the cooling water near the laser rod 300, pump-light absorption in water can be reduced when compared with that in cone laser-gain module 20B.

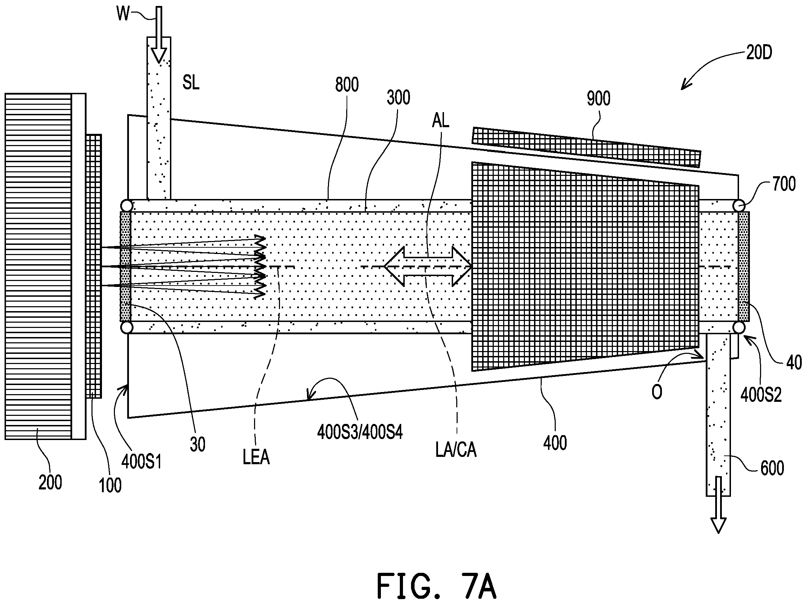

FIG. 7A is a schematic view of a single-cone laser-gain module with both end- and side-pumps according to a fifth embodiment of the invention. FIG. 7B is a cross-sectional view of FIG. 7A. Referring to FIG. 7A and FIG. 7B, the cone laser-gain module 20D of this embodiment is similar to the cone laser-gain modules 20A, 20B, and 20C, except that the cone laser-gain module 20D further includes side-pumping light sources 900. The side-pumping light sources 900 are disposed around reflective sides 400S3 of the cone structure 400 and configured to emit additional pump lights toward the laser rod 300, wherein the reflective sides 400S3 are connected to the pump-light-exiting side 400S2 and the pump-light-incident side 400S1. Moreover, in this embodiment, the cone structure 400 is preferably made of dielectric transparent to the pump light and surfaces 400S3/400S4 are total-internal-reflection or grazing-incidence surfaces for the lights from the end-pumping light source 100. An incident light at grazing incidence is mostly reflected at an incident boundary. In practice, the side-pumping light source 900 can fully cover the side wall of the cone structure 400. For clarity, Fig. 7A only illustrates partial coverage of the side-pumping light sources 900 on the side wall.

Based on the foregoing, since the cone laser-gain module 20D of this embodiment is equipped with additional side-pumping light sources 900, the gain of the laser module is further increased.

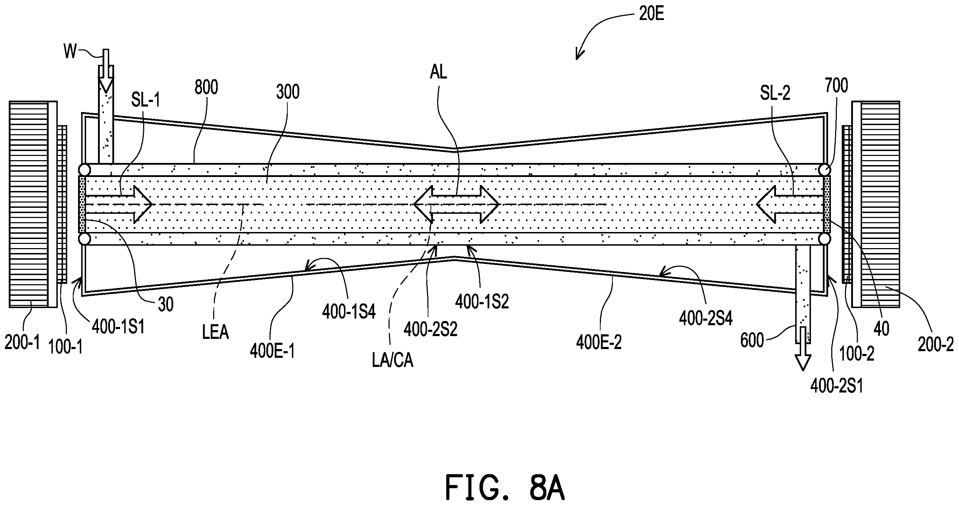

FIG. 8A is a schematic view of a double-cone laser-gain module according to a sixth embodiment of the invention. FIG. 8B is a left cross-sectional view of the pump-light source 100-1 in FIG. 8A. FIG. 8C is a right cross-sectional view of the assembly of the pump-light source 100-2 and heat sink/cooling plate 200-2 in FIG. 8A. Referring to FIG. 8A, FIG. 8B, and FIG. 8C, the double-side-pumped cone laser-gain module 20E of this embodiment has two cascaded cone laser-gain modules similar to 20, 20A, 20B, 20C, and 20D. Specifically, the double-side-pumped cone laser-gain module 20E includes two pump-light sources 100-1, 100-2 and two collinearly aligned cone structures 400E-1 and 400E-2 facing each other. The two pump-light sources 100-1, 100-2, such as LED or LD, are configured to emit pump lights SL-1, SL-2 about the cone axis CA from the opposite sides of the two large cone apertures.

Specifically, in this embodiment, the two pump-light sources 100-1 and 100-2 are configured to emit pump lights SL-1 and SL-2 along a laser-emission axis LEA. The two cone structures 400E-1 and 400E-2 with an inner reflecting surface are configured to accommodate the laser rod 300, accept the pump lights SL-1 and SL-2, and reflect off-axis pump lights to the laser rod 300, wherein the joint cone axis CA is aligned parallel to the longitudinal axis LA of the laser rod300. The on-axis or paraxial pump lights are intercepted and absorbed by the co-axis laser rod 300 immediately. Some off-axis pump lights that initially miss the laser rod 300 are reflected and concentrated on the laser rod 300 by the inner surface of the two-cone structure 400. The laser rod 300 is configured to absorb the pump lights of a first wavelength to emit a laser signal of another wavelength along the rod axis. Preferably, the pump-incidence surface of the laser rod is optically coated with an anti-reflection dielectric layer at a first wavelength or the pump wavelength to maximize the transmission of the pump lights.

In detail, the two cone structures 400E-1 and 400E-2 are configured to reflect diverging lights in the pump lights SL-1 and SL-2, which initially miss the laser rod 300, back to the laser rod 300, wherein the collinear cone axis CA of the two cone structures 400E-1 and 400E-2 is aligned parallel to the longitudinal axis LA of the laser rod 300. The pump lights SL-1 and SL-2 emitted from the two pump-light sources 100-1 and 100-2 respectively enter the two cone structures 400E-1 and 400E-2 from the pump-light-incident sides 400-1S1 and 400-2S1 of the two cone structures 400E-1 and 400E-2, and an output laser L emits from the laser rod 300. The two pump-light-incident sides 400-1S1 and 400-2S1 are opposite to each other. The pump-light-incident side 400-1S1 and 400-2S1 and pump-light-exiting side 400-1S2 and 400-2S2 of each cone structure 400E-1 and 400E-2 are opposite to each other and the pump-light-exiting sides 400-1S2 and 400-2S2 of the two cone structures 400E-1 and 400E-2 are connected. Diverging pump lights that initially miss the laser rod 300 are reflected and concentrated on the laser rod 300 by the inner surfaces 400-1S4 and 400-2S4 of the two cone structures 400E-1 and 400E-2. Apertures of the pump-light-incident sides 400-1 S1 and 400-2S1 of the two cone structures 400E-1 and 400E-2 are respectively larger than the apertures of the pump-light-exiting sides 400-1S2 and 400-2S2 of the two cone structure 400E-1 and 400E-2.

Furthermore, one or both of the pump-light sources 100-1 and 100-2 has a transmission hole along the cone axis CA, so that the amplified laser lights AL could pass through one or both of the pump-light sources 100-1 and 100-2 to generate the output laser L (refer to Figs. 1A, 1B, 2A and 2B). In this example, FIG. 8C illustrates that the pump-light source 100-2 has a transmission aperture 100-H for transmitting the output laser L.

In this embodiment, the double-side-pumped cone laser-gain module 20E further includes heat sinks/cooling plates 200-1 and 200-2. The heat sinks/cooling plates 200-1 and 200-2 are respectively attached to the pump-light sources 100-1 and 100-2 for heat dissipation.

Furthermore, in this embodiment, the double-side-pumped cone laser-gain module 20E further includes a first dielectric layer 30 and a second dielectric layer 40 on the two end surfaces of the laser rod 300. The specifications for 30 and 40 are the same as those for cone laser-gain module 20, 20A, 20B, 20C, and 20D, except that, when functioning as a laser oscillator in FIG. 2A or FIG. 2B, the double-side-pumped cone laser-gain module 20E can adopt an external cavity mirror or output coupler next to the transmission aperture on the assembly of the pump-light source and heat sink/cooling plate.

Based on the foregoing, since the double-side-pumped cone laser-gain module 20E of this embodiment includes two pump-light sources 100-1 and 100-2, the gain of the laser module is further increased.

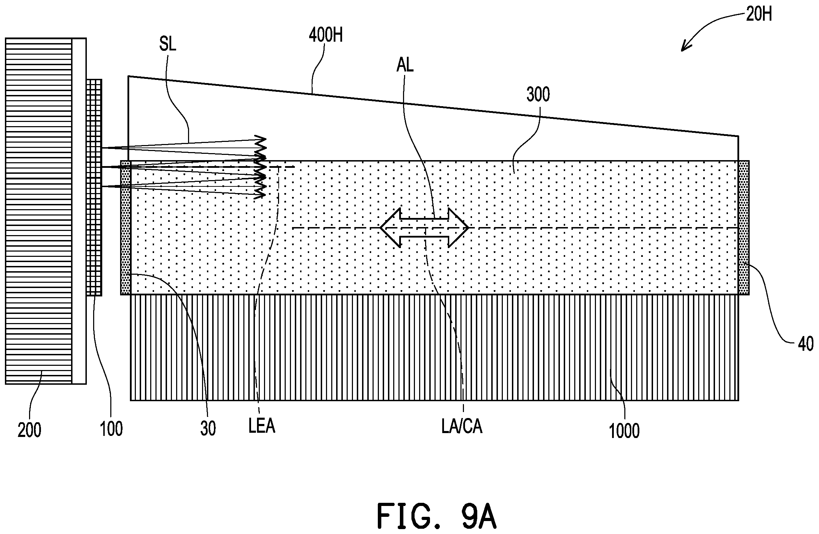

FIG. 9A is a schematic view of a single-partial-cone laser module according to a seventh embodiment of the invention. FIG. 9B is a right cross-sectional view of FIG. 9A. Referring to FIG. 9A and FIG. 9B, the cone laser-gain module 20H of this embodiment is similar to the cone laser-gain module 20 of FIG. 3, except that the cone laser-gain module 20H further includes a cooling element 1000 down below for removing the waste heat from the laser rod 300. The cooling element 1000 is directly attached to the laser rod 300. The cooling element 1000, for example, is a heat sink or cooling plate. Compared with the water-cooling scheme in the previous embodiments, this embodiment has the advantage of direct solid-state cooling for the laser rod.

Moreover, in this embodiment, a cross-section of the cone structure 400H is a partial circle. The laser-emission axis LEA is parallel to the cone axis CA, but the laser-emission axis LEA is not necessarily aligned with the cone axis CA.

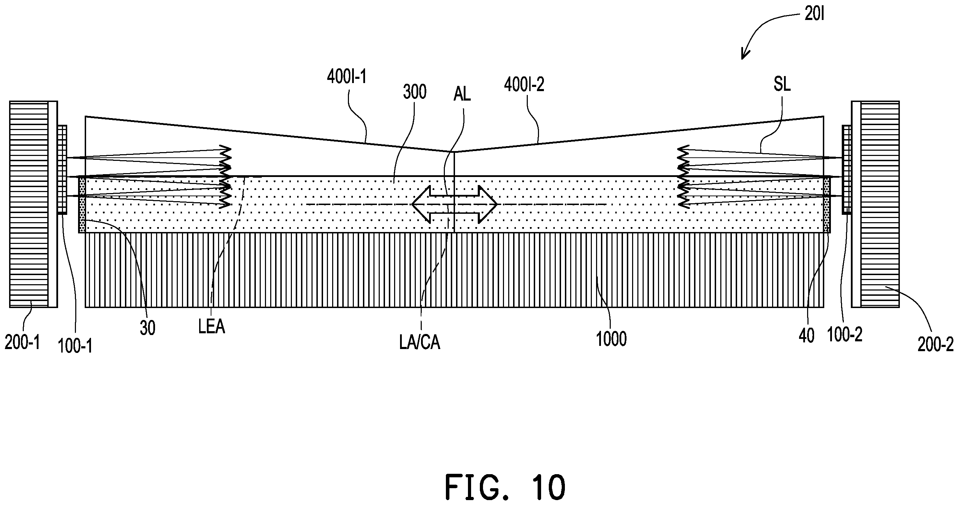

FIG. 10 is a schematic view of a double-partial-cone laser-gain module according to an eighth embodiment of the invention. Referring to FIG. 10, the double-side-pumped cone laser-gain module 201 of this embodiment is similar to the double-side-pumped cone laser-gain module 20E of FIG. 8A, except that the double-side-pumped cone laser-gain module 20I further includes a cooling element 1000 down below for removing the waste heat from the laser rod 300. The cooling element 1000 is attached to the laser rod 300. The cooling element 1000, for example, is a heat sink or cooling plate.

Moreover, in this embodiment, cross-sections of the cone structures 400I-1 and 400I-2 are partial circles. The laser-emission axis LEA is parallel to the cone axis CA, but the laser-emission axis LEA is not necessarily aligned with the cone axis CA.

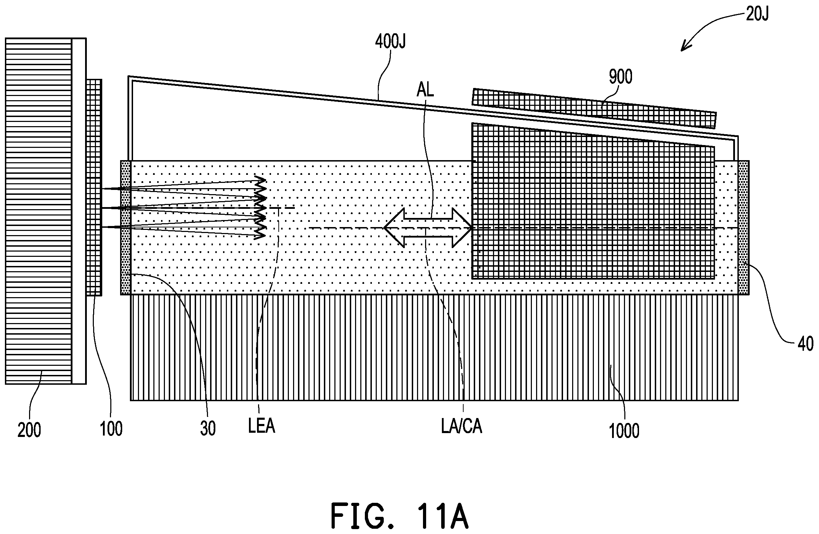

FIG. 11A is a schematic view of a partial-cone laser-gain module with both end and side pumps according to a ninth embodiment of the invention. FIG. 11B is a right cross-sectional view of FIG. 11A. Referring to FIG. 11A and FIG. 11B, the cone laser-gain module 20J of this embodiment is similar to the cone laser-gain module 20D of FIG. 7A, except that the cone laser-gain module 20I further includes a cooling element 1000 down below for removing the waste heat from the laser rod 300. The cooling element 1000 is attached to the laser rod 300. The cooling element 1000, for example, is a heat sink or cooling plate.

Moreover, in this embodiment, a cross-section of the cone structure 400J is a polygon. The laser-emission axis LEA is parallel to the cone axis CA, but the laser-emission axis LEA is not necessarily aligned with the cone axis CA.

When the laser modules in the aforementioned embodiments function as a Fig. 1A laser amplifier, the dielectric layers 30, 40 are anti-reflecting at the laser wavelength and a transmission aperture 100-H in Fig. 8C is opened on the assembly of the pump-light source and heat sink/cooling plate for laser injection or laser output. As previously stated, a Fig. 1A laser-amplifier module can be converted into a Fig. 2A laser oscillator by adopting an external cavity with two cavity mirrors. Such conversion is advantageous and flexible in optimizing laser performance by changing mirrors with different designs.

Based on the aforementioned embodiments of the disclosure, all the single-cone laser gain module, double-cone laser gain modules, partial-cone laser gain module, cone laser amplifier, or cone laser oscillator of the present invention include a cone structure with an inner reflection surface enclosing the cone axis to reflect, collect, concentrate, and recycle side-pumped lights toward a laser rod for efficient laser pumping. The present invention is particularly useful for man-made diverging light sources, such as LED and LD, to pump a laser gain medium and generate a laser.

## Claims

1. A cone laser-gain module (20, 20A, 20B, 20C, 20D, 20H, 20J), comparing:
a pump-light source (100), configured to emit pump lights (SL, SL') about a laser-emission axis (LEA);
a laser rod (300) with its longitudinal axis (LA) parallel to the laser emission axis (LEA), disposed on a power-flow path of the pump lights (SL, SL') and configured to absorb the pump lights (SL, SL') to generate amplified laser lights (AL) of another wavelength along the laser-emission axis (LEA); and
a cone structure (400), configured to accommodate the laser rod (300) and configured to confine the pump lights (SL, SL') toward the laser rod (300),
wherein a cone axis (CA) of the cone structure (400) is aligned parallel to the laser-emission axis (LEA),
wherein the pump lights (SL, SL') emitted from the pump-light source (100) enter the cone structure (400) from a larger cone aperture toward a smaller cone aperture,
wherein the pump lights (SL'), some of which diverge and initially miss the laser rod (300), are reflected and concentrated on the laser rod (300) by an inner surface (400S4) of the cone structure (400).

2. The cone laser-gain module (20, 20A, 20B, 20C, 20D, 20H, 20J) according to claim 1, wherein the pump-light source (100) is an array of light-emitting diodes, an array of laser diodes, or an array of a combination of light-emitting diodes and laser diodes.

3. The cone laser-gain module (20, 20A, 20B, 20C, 20D, 20H, 20J) according to claim 1, further comprising a heat sink or cooling plate (200), attached to the pump-light source (100) for heat dissipation.

4. The cone laser-gain module (20, 20A, 20B, 20C, 20D, 20H, 20J) according to claim 1, wherein a cross-section of the cone structure (400) is a full circle, a partial circle, a square, a rectangle, or a polygon.

5. The cone laser-gain module (20, 20A, 20B, 20C, 20D, 20H, 20J) according to claim 1, wherein the inner surface (400S4) of the cone structure (400) is made of reflecting metal, dielectric, or ceramic.

6. The cone laser-gain module (20, 20A, 20B, 20C, 20D, 20H, 20J) according to claim 1, wherein the laser rod (300) is made of one among Nd:YAG, Nd:Glass, Nd:YAP, Yb:YAG, Ho/Cr/Tm:YAG, Nd:YVO4, Er:YAG, Cr:LiSAF, Ti:Sapphire, Cr/Er:YSGG, Alexandrite, and Er:Glass crystals.

7. The cone laser-gain module (20A) according to claim 1, further comprising luminescence materials (500) coated on the inner surface (400S4) of the cone structure (400) or filled inside the cone structure (400), wherein the luminescence materials (500) are configured to absorb the pump lights (SL, SL') of a first wavelength to generate luminescence lights (F) of a second wavelength,
wherein the laser rod (300) absorbs the luminescence lights (F) to generate the amplified laser lights (AL).

8. The cone laser-gain module (20B, 20C, 20D) according to claim 1, further comprising two hollow tubes (600), configured to allow water (W) to flow in or out of the cone structure (400) for cooling down the laser rod (300).

9. The cone laser-gain module (20C, 20D) according to claim 8, further comprising a water tube (800), accommodated in the cone structure (400), surrounding the laser rod (300), and connecting to the two hollow tubes (600) for cooling down the laser rod (300).

10. The cone laser-gain module (20D, 20J) according to claim 1, further comprising side-pumping light sources (900), disposed around transverse sides of the cone structure (400, 400J) and configured to emit additional pump lights of a first wavelength toward the laser rod (300).

11. The cone laser-gain module (20H, 20J) according to claim 1, further comprising a cooling element (1000), attached under the laser rod (300),
wherein the cooling element (1000) is a heat sink or cooling plate.

12. A double-side-pumped cone laser-gain module (20E, 201), comprising:
two pump-light sources (100-1, 100-2), configured to emit pump lights (SL-1, SL-2) of a first wavelength along a laser-emission axis (LEA);
a laser rod (300) with its longitudinal axis (LA) parallel to the laser emission axis (LEA), disposed on a power-flow path of the pump lights (SL-1, SL-2, SL) and configured to absorb the pump lights (SL-1, SL-2) to generate amplified laser lights (AL) of another wavelength along the laser-emission axis (LEA); and
two cone structures (400E-1, 400E-2, 400I-1, 400I-2) with a collinear cone axis (CA) joining two smaller cone apertures, configured to accommodate the laser rod (300) and configured to confine the pump lights (SL-1, SL-2, SL) toward the laser rod (300),
wherein the collinear cone axis (CA) of the two cone structures (400E-1, 400E-2, 400I-1, 400I-2) is aligned parallel to the laser-emission axis (LEA),
wherein the pump lights (SL-1, SL-2, SL) emitted from the two pump-light sources (100-1, 100-2) enter the two cone structures (400E-1, 400E-2, 400I-1, 400I-2) from two larger cone apertures toward the joint smaller cone apertures,
wherein the pump lights, some of which diverge and initially miss the laser rod (300), are reflected and concentrated on the laser rod (300) by inner surfaces (400-1S4, 400-2S4) of the two cone structures (400E-1, 400E-2, 400I-1, 400I-2).

13. A cone laser amplifier (10, 10A), comprising:
the cone laser-gain module (20, 20A, 20B, 20C, 20D, 20H, 20J) according to any one of claims 1 to 11 or the double-side-pumped cone laser-gain module (20E, 20I) according to claim 14; and
a seed laser (11), configured to inject a seed light (SE) into the cone laser-gain module (20, 20A, 20B, 20C, 20D, 20H, 20J) or the double-side-pumped cone laser-gain module (20E, 20I) for amplification.

14. A cone laser oscillator (10', 10A'), comprising:
the cone laser-gain module (20, 20A, 20B, 20C, 20D, 20H, 20J) according to any one of claims 1 to 11 or the double-side-pumped cone laser-gain module (20E, 20I) according to claim 14;
a cavity mirror (16'); and
an output-coupler mirror (17'), wherein the cone laser-gain module (20, 20A, 20B, 20C, 20D, 20H, 20J) or the double-side-pumped cone laser-gain module (20E, 20I) is installed between the cavity mirror (16') and the output-coupler mirror (17').
